# EUROPEAN PATENT APPLICATION

(11) **EP 0 895 417 A2**
(43) Date of publication of application: **03.02.1999**
(21) Application number: 98306114.4
(22) Date of filing: 31.07.1998
(51) Int. Cl.: H04N 5/92

(54) **Monitoring video system suitable for monitoring a purality of spots**

(30) Priority: 01.08.1997 JP 207530/97
(71) Applicant: MATSUSHITA ELECTRIC INDUSTRIAL CO., LTD, Kadoma-shi, Osaka 571 (JP)
(72) Inventor: Kaneko, Katsuyuki, Moriguchi-shi, Osaka-fu 570-0096 (JP)
(74) Representative: Crawford, Andrew Birkby

(57) **Abstract**

The object of the present invention is to provide a monitoring video system that records high-quality video images over a long period. The monitoring video system of the present invention includes cameras (1-4), a codec (5-8) for encoding the video data output from the cameras (1-4), a magnetic disk (11) for temporarily storing the encoded video data output from the codec (5-8), and a digital VTR (12) for recording the encoded video data stored on the magnetic disk (11). Frame data are sampled from video data in at least one of the data transmission from the codec (5-8) to the magnetic disk (11) and the data transfer from the magnetic disk (11) to the digital VTR (12) to decrease the frame rate of the video data. When data is transferred to the archive device, edited data are intermittently transferred, and the recording operations of the digital VTR (12) device are synchronous to the data transfer.

## Description

### BACKGROUND OF THE INVENTION

### (1) Field of the Invention

The present invention relates to a monitoring video system that stores video data transmitted from one or a plurality of camera(s).

### (2) Related Art

Monitoring video systems with a plurality of cameras that are installed at the spots to be monitored have been developed. Such monitoring video systems record the video data transmitted from these cameras using a recorder, for instance, an analog VTR (Video Tape Recorder).

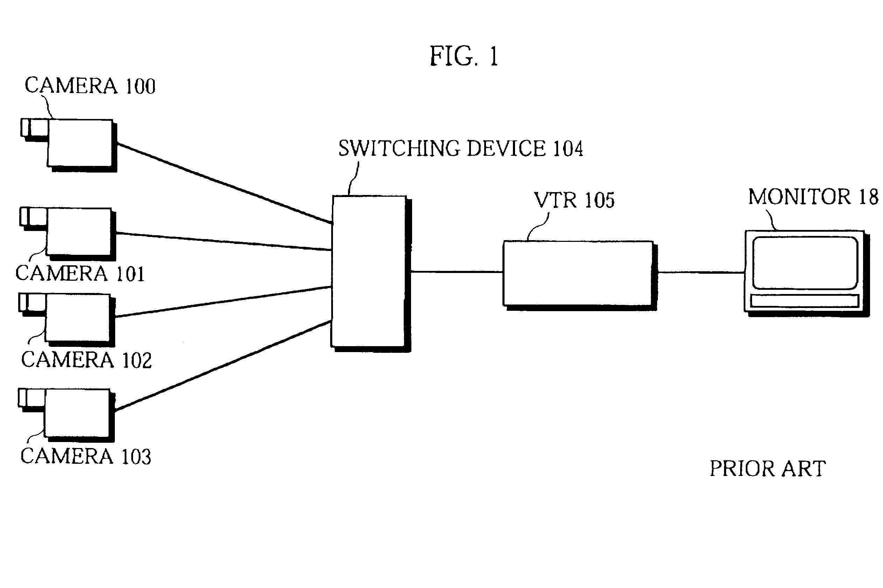

Fig. 1 shows an example of a conventional monitoring video system with a plurality of cameras. Cameras 100 to 103 are installed at the spots to be monitored.

Analog video signals from these cameras are input into switching device 104. Switching device 104 outputs the video data transmitted from cameras 100 to 103 to VTR 105, switching the video data in accordance with the predetermined order and the recording order. VTR 105 records the transmitted video data on a videotape. The video images recorded in VTR 105 are displayed on monitor 106 when necessary.

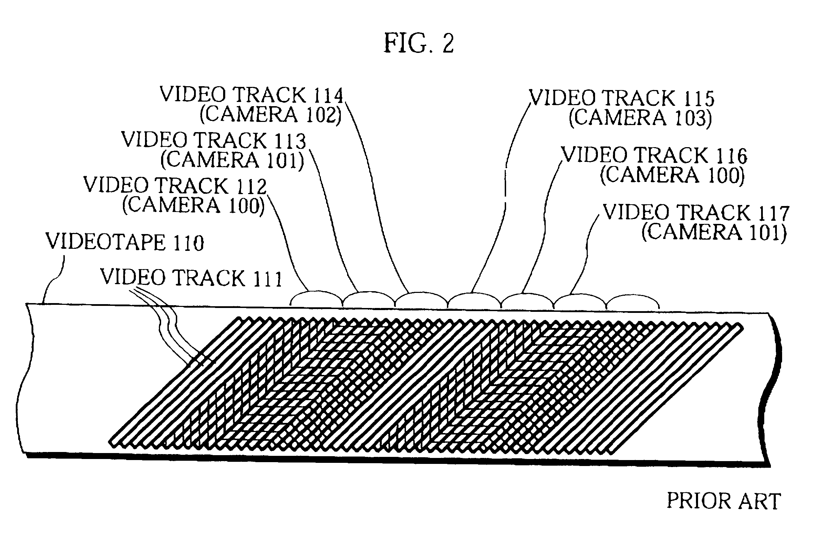

Fig. 2 shows a data arrangement when video data from each of cameras 100 to 130 are recorded on a videotape in VTR 105.

One frame of video data transmitted from a camera is recorded on a videotape by a rotating cylindrical head as a slant video track, for instance, video track 111. Sets of such video tracks are recorded on a videotape in order. The number of the video tracks included in a set of video tracks depends on the time given to the video data from a camera. For instance, Fig. 2 shows that five video tracks 112 representing video data from camera 100 are recorded on videotape 110. Five video tracks 113 representing video data from camera 101 are recorded on videotape 110, following video tracks 112, and five video tracks 114 and 115 are recorded on videotape 110, following video tracks 113.

In such a conventional monitoring video system, it is necessary for the VTR to record for a longer time compared with a standard home video or VTR for broadcasting.

When a VTR records for a relatively long time, the quality of video data lowers due to the causes described below.

Firstly, the running speed of a videotape is decreased and the width of the video tracks is narrowed in order to increase the number of video tracks recorded on a certain length of videotape. In this case, the dynamic range of the video data is decreased, lowering the video quality.

Secondly, the running speed of a videotape and the velocity of the cylindrical head are decreased in order to decrease the number of video tracks recorded on a certain length of videotape. In this case, the frequency band for recording is limited, lowering the video quality.

For a conventional monitoring video system, lowering the video quality is unavoidable when recording video data for a relatively long time. As a result, video data is often recorded in monochrome in such a conventional monitoring video system.

When changing the reproduction period per certain length of videotape in a conventional monitoring video system, the running speed of the videotape and the velocity of the head must be changed. As a result, such a conventional monitoring video system needs to include devices that can change the running speed of the videotape and the velocity of the head.

### SUMMARY OF THE INVENTION

It is accordingly the object of the present invention to provide a monitoring video system that may record fine-quality video for a relatively long time and may easily change the recording time of video data.

The above-mentioned object is achieved by a monitoring video system may include: at least one camera for taking video images of a subject, a camera being associated with a codec that encodes the video images output from the associated camera to produce first encoded video data; a temporary storage device for temporarily storing data; a transmission device for transmitting at least part of the first encoded video data from each codec to the temporary storage device; an archive device for storing data; and a process/transfer device for changing first encoded video data that transmitted from the transmission device to the temporary storage device into second encoded video data with a frame rate lower than a frame rate of the first encoded video data based on the first encoded video data transmitted from the transmission device to the temporary storage device, and for transferring the second encoded video data to the archive device or a monitoring video system may include: a plurality of cameras for taking video images of subjects; a switching device for selecting one video image from the video images that are simultaneously transmittcd in parallel from the plurality of cameras, and for changing a selection of a video image with a given interval; a codec for encoding video images output from the switching device to produce first encoded video data; a temporary storage device for temporarily storing data; a transmission device for transmitting at least part of the first encoded video data from the codec to the temporary storage device; an archive device for storing data; and a process/transfer device for changing first encoded video data that transmitted from the transmission device to the temporary storage device into second encoded video data with a frame rate lower than a frame rate of the first encoded video data based on the first encoded video data transmitted from the transmission device to the temporary storage device, and for transferring the second encoded video data to the archive device.

In the monitoring video system, the video data taken by the cameras are recorded on the archive device with a low frame rate. As a result, the quality of each piece of the frame video data is maintained, and the period of time to record video data is extended according to the decrease in the frame rate.

Newly transmitted video data is stored in the temporary memory that is easy to access with higher frame rate than that of the video data stored on the archive device. As a result, video data stored in the monitoring video system is convenient for the user.

Low-frame-rate encoded video data is created by sampling frame video data out of a plurality of consecutive pieces of frame video data that are included in the original encoded video data.

When frame video data are sampled at certain intervals out of a plurality of consecutive pieces of encoded video data, high speed video data may be edited according to the intervals.

When recording operations in the archive device are synchronized with transferring operations in the device for processing and transfer, the recording operations are performed at a normal recording rate in the archive device independent of the frame rate of the video data to be recorded, so that it is unnecessary to use a particular device for changing the recording rate.

It is possible to switch the video data transmitted from a plurality of cameras in order and to monitor the spots using the switching device for switching the video data in the order of time, or using the device for processing and transfer in order to select the segments taken by the plurality of the cameras in order as the sampling subjects.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the Drawings:
Fig. 1 shows an example of the construction of a conventional monitoring video system with a plurality of cameras;
Fig. 2 shows a data arrangement recorded on a videotape in the monitoring video system in Fig. 1;
Fig. 3 shows a construction of a monitoring video system according to the first embodiment;
Fig. 4 is a timing chart of the monitoring video system shown in Fig. 3;
Fig. 5 shows an example of directory table for controlling the video data recorded on a magnetic disk;
Fig. 6 shows an example of a segment information table for controlling the video data recorded on a magnetic disk;
Fig. 7 is a flowchart showing an example of the process in which the processing device records video data on a magnetic disk in the first embodiment;
Fig. 8 is a flowchart showing an example of the process in which video data is sampled from a magnetic disk in the first embodiment;
Fig. 9 shows how frame data are typically sampled from one segment;
Fig. 10 shows a construction of a monitoring video system according to the second embodiment;
Fig. 11 shows a construction of the processing device shown in Fig. 10;
Fig. 12 is a timing chart of a monitoring video system according to the second embodiment;
Fig. 13 is a flowchart showing an example of the recording process performed by disk controller 23 in the second embodiment;
Fig. 14 is a flowchart showing an example of the sampling process by disk controller 23 in the second embodiment;
Fig. 15 is the reference table used in the process shown in Fig. 14;
Fig. 16 shows an arrangement of the data stored on the videotape in digital VTR 17 in Fig. 10; and
Fig. 17 shows the operations performed by a monitoring video system according to the third embodiment.

### DESCRIPTION OF THE PREFERRED EMBODIMENTS

### (The First Embodiment)

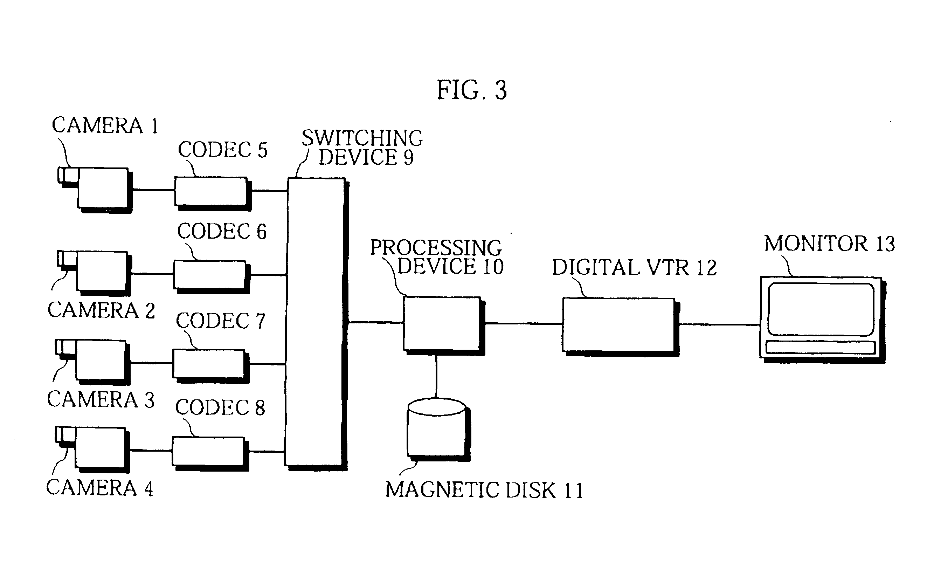

Fig. 3 shows a construction of a monitoring video system according to the present embodiment.

The monitoring video system is used to monitor four spots as in the monitoring video system in Fig. 1. Cameras 1 to 4 and codecs 5 to 8 that encode the video data output from cameras 1 to 4 are installed at these spots.

Codecs 5 to 8 are connected to switching device 9. Switching device 9 selects the encoded video data output from codecs 5 to 8 in order, and transmits the selected data to processing device 10.

Processing device 10 temporarily records the encoded video data transmitted from switching device 9 on magnetic disk 11, edits encoded video data with a low frame rate, and transfers the encoded video data to digital VTR 12.

Digital VTR 12 records the encoded video data transferred from processing device 10 on a videotape using the recording head.

Digital VTR 12 reads the encoded video data recorded on the videotape using the reproduction head, and display the reproduced video images on monitor 13 when necessary.

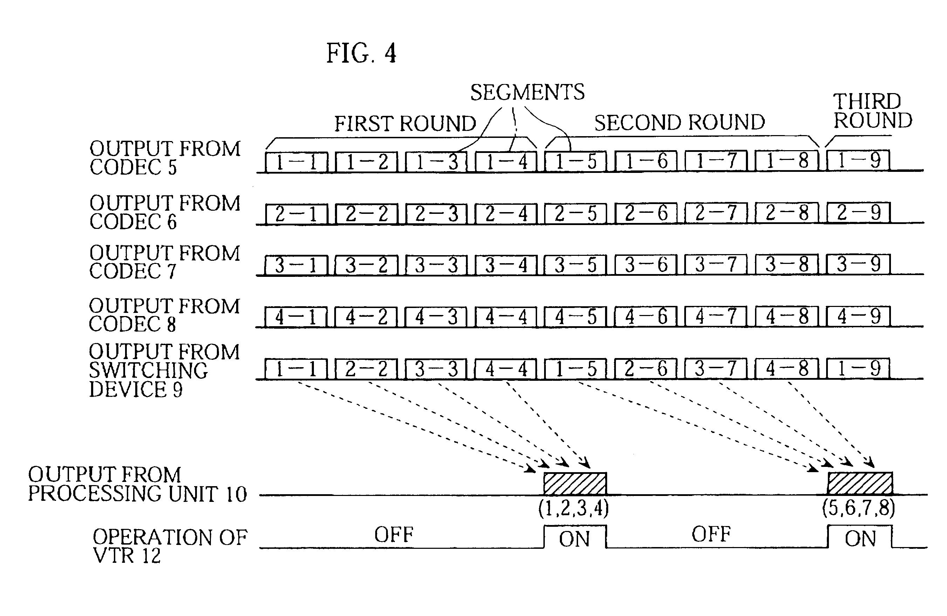

Fig. 4 is a timing chart that shows video data transmitted from codecs 5 to 8 are recorded in digital VTR 12. The process is explained below with reference to Fig. 4.

Cameras 1 to 4 synchronize with each other, and codecs 5 to 8 synchronize with each other.

Camera 1 sequentially outputs segments of video data to codec 5. One segment refers to video data at a spot to be monitored for a predetermined period of time (for instance, for 10 seconds).

Codecs 5 to 8 encode the segments of the video data transmitted from cameras 1 to 4, respectively, and output segments of encoded video data 1-1, 1-2, and the like to switching device 9 in order. The encoding refers to an A/D (Analog-Digital) conversion on analog data and data compression on the data. In this data compression, a compression method according to the spacial correlation in separate pieces of frame data, for instance, motion JPEG (Joint Photographic Experts Group) is used, considering the sampling process in the unit of a frame in processing device 10.

Codecs 6 to 8 output segments of encoded video data (hereinafter, a segment of encoded video data is simply called a "segment") to switching device 9 in order in the same manner as codec 5.

Two reference numbers are given to a segment in Fig. 4. The first reference number represents the number of the camera that took the segment. The second reference number represents the relative time that the camera took the scene corresponding to the segment. More specifically, segment 2-1 refers to the segment corresponding to the second scene taken by camera 1. Hereinafter, the second reference number given to a segment, for instance, "2" to segment 1-2, is called a "scene number" of the segment.

As shown in Fig. 4, segments are output from codecs 5 to 8 to switching device 9 in parallel.

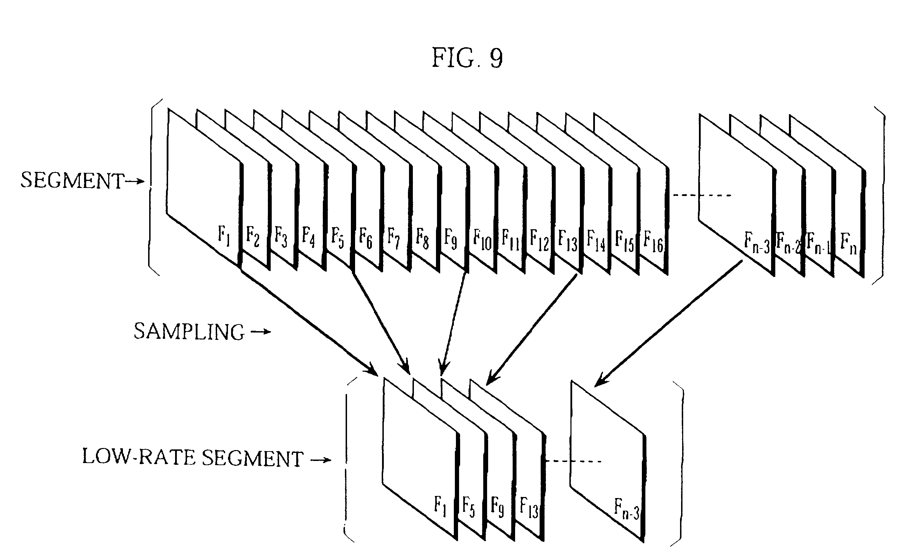

Each of the segments includes a plurality of ("n") consecutive pieces of frame video data (hereinafter a piece of frame video data is called a piece of "frame data"), that is, frame data F1 to Fn as shown in Fig. 9. When the frame rate is 30 frame/second, "n" is 300 in a segment corresponding to a 10-second scene.

Switching device 9 operates in parallel with codecs 5 to 8. Switching device 9 switches the video data that are transmitted from codecs 5 to 8 in order, and transmits video data to processing device 10. More specifically, switching device 9 selects segment 1-1 that was taken by camera 1 out of the four segments, that is, segments 1-1, 2-1, 3-1, and 4-1 that are transmitted from codecs 5 to 8 first. Switching device 9 selects segment 2-2 that was taken by camera 2 out of the four segments, that is, segments 1-2, 2-2, 3-2, and 4-2 that are transmitted from codecs 5 to 8 second. Switching device 9 selects segment 3-3 third, and segment 4-4 fourth. After selecting one segment for each of the cameras for the first round, switching device 9 selects segments for the second round in the same order as for the first round. More specifically, switching device 9 selects segments 1-5, 2-6, 3-7, and 4-8 in order for the second round.

As a result, switching device 9 selects video scenes so that one scene taken by one of these four cameras is selected every four scenes.

Processing device 10 stores the segments transmitted from switching device 9 on magnetic disk 11. Magnetic disk 11 has only enough capacity for temporarily storing transmitted segments. When magnetic disk 11 is filled with segments, the stored segments are cleared in order to store newly transmitted segments.

Processing device 10 samples video data out of a segment transmitted from switching device 9 in frame units, edits a segment with a lower frame rate than the original one (hereinafter a segment with a lower frame rate than the original one is called a "low-rate segment"), and transfers the newly edited low-rate segment to digital VTR 12.

The storing of segments on magnetic disk 11, and sampling and transfer of frame data will be described later.

Digital VTR 12 is synchronized with the output of low-rate segments from processing device 10, and records video data of low-rate segments on a videotape.

When receiving user instructions, digital VTR 12 decodes the video data of low-rate segments recorded on the videotape according to the method corresponding to the encoding method in which codecs 5 to 8 compress video data, and displays the decoded video images on monitor 13.

When receiving user instructions, processing device 10 transfers the segments stored on magnetic disk 11 to digital VTR 12 without sampling, and has digital VTR 12 decode the video data of the transferred segments and display the decoded video images on monitor 13.

### [Storing of Segments on Magnetic Disk, and Sampling and Transferring of Frame Data]

In this specification, magnetic disk 11 has a capacity to store 32 segments.

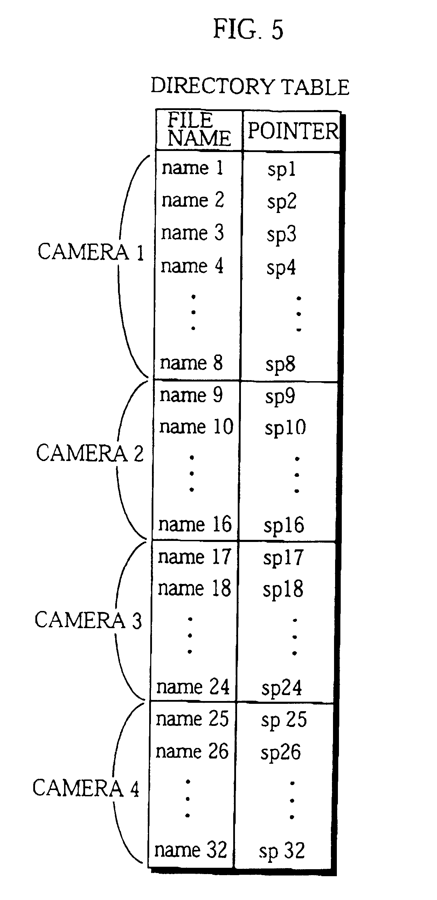

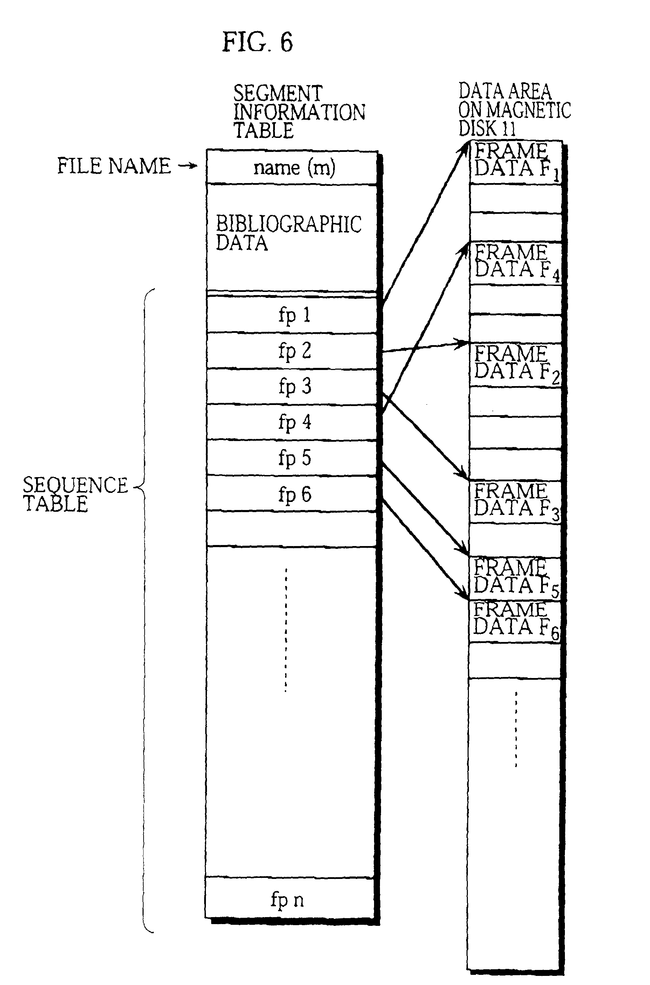

Processing device 10 stores a directory table as shown in Fig. 5 and a plurality of (32) segment information tables that show the information on each of the segments as shown in Fig. 6 in the memory in order to control the video data stored on magnetic disk 10.

Each of the segment information tables includes a file name (one of "names 1" to "name 32"), the bibliographical information on the segment recorded in the segment information table (the information transmitted from the corresponding camera along with video data, for instance, the time when the video data of the segment was taken), and a sequence table in which pointers fp1 to fpn are related to frame data F1 to Fn.

Pointers fp1 to fpn show the data areas on magnetic disk 11 in which frame data F1 to Fn are recorded.

The directory table includes pointers sp1 to spn that show the memory areas on magnetic disk 11 in which these 32 segment information tables are recorded.

By referring to the directory table and segment information tables, processing device 10 can locate any piece of frame data included in the segments.

### 1) Storing of Segments on Magnetic disk

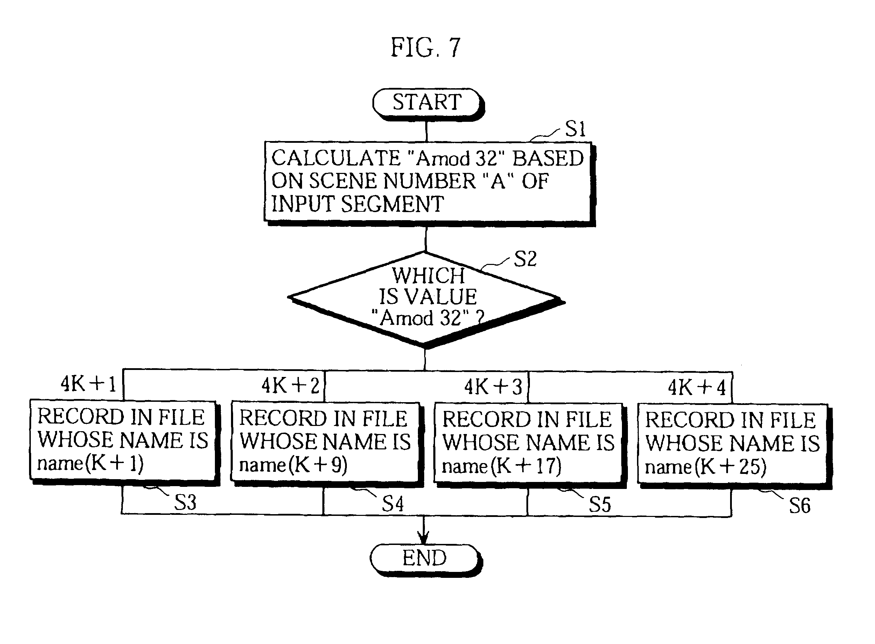

Fig. 7 is a flowchart showing an example of the process in which processing device 10 stores video data on magnetic disk 11.

When receiving a segment transmitted from switching device 9, processing device 10 calculates the remainder of the division of scene number "A" by 32 (the value "Amod32") (Step S1). When the value "Amod32" is 4k+1 (k=0, 1, 2, ...), processing device 10 records the segment in the segment information table whose file name is "name (1+k)". When the value "Amod32" is 4k+2, processing device 10 records the segment in the segment information table whose file name is "name (9+k)". When the value "Amod32" is 4k+3, processing device 10 records the segment in the segment information table whose file name is "name (17+k)". When the value "Amod32" is 4k+4, processing device 10 records the segment in the segment information table whose file name is "name (25+k)" (Steps S2 to S6).

A segment is recorded in a segment information table in the manner described below.

Frame data F1 to Fn included in an input segment are written in free data areas on magnetic disk 11. The bibliographic data and the pointers fpl to fpn that show the data areas on magnetic disk 11 in which the frame data F1 to Fn are recorded in the segment information table having the corresponding file name.

More specifically, segment 1-1, which is the segment transmitted first from switching device 9, is recorded in the segment information table whose file name is "name 1". The following segments, segments 2-2, 3-3, 4-4, 1-5, and 2-6 are recorded in the segment information tables whose tile names are "name 9", "name 17", "name 25", "name 2", and "name 10", respectively.

When eight rounds of segment transmission are completed, 32 segments are stored on magnetic disk 11. When segments 1-33, 2-34, 3-35, and 4-36 for the ninth round are stored on magnetic disk 11, these segments are written in the segment information tables whose names are "name 1", "name 9", "name 17", and "name 25". As a result, segments 1-1, 2-2, 3-3, and 4-4 are erased from magnetic disk 11.

### 2) Sampling Frame Data Stored on Magnetic Disk

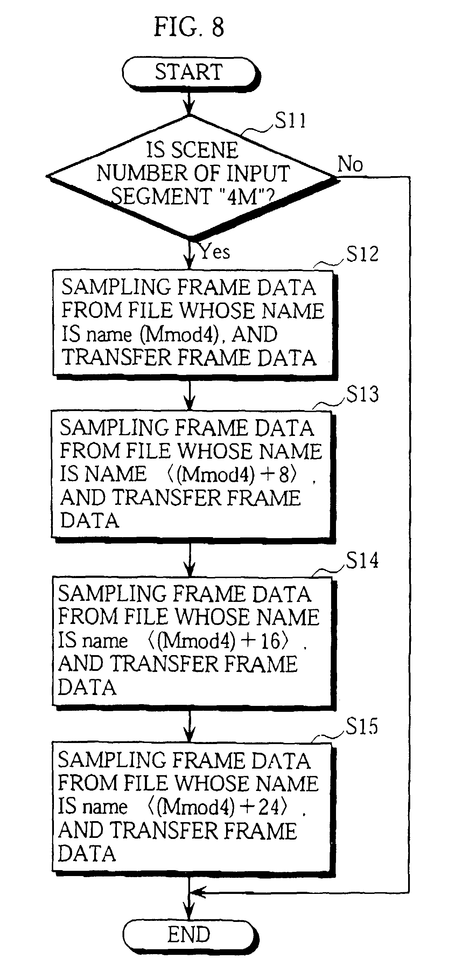

Fig. 8 is a flowchart showing an example of the process in which processing device 10 samples frame data that are stored on magnetic disk 11. When receiving a segment transmitted from switching device 9, processing device 10 performs the operations described below.

When the scene number of a segment is "4M" (M=1, 2, 3, ...) (Step S11), processing device 10 calculates the remainder of the division of the value "M" by 4 (the value "Mmod4"). Processing device 10 samples frame data from the segment information table whose file name is "name (Mmod4)", and transfers the sampled frame data. In sampling, one piece of frame data is extracLed for every predetermined number of consecutive pieces of frame data (in this specification, for every four consecutive pieces of frame data).

More specifically, the directory data is referred to, and the segment information table is searched for based on pointer sp (Mmod4) that is related to "name (Mmod4)" in the directory data.

The pointer fp1 is selected from the sequence table in the segment information table whose file name is "name (Mmod4)". Then pointers fp5, fp9, and the like are extracted for every four pointers from the sequence table. On referring to the pointers fp1, fp5, fp9, and the like, processing device 10 samples the frame data F1, F5, F9, and the like in the data area, and transfers the frame data (Step S12).

As a result, a low-rate segment with a frame rate which is about 25% of the frame rate of the original segment is edited from the segment recorded in the segment information table whose file name is "name (Mmod4)", and is transferred to digital VTR 12.

For each of the segment information tables whose file names are "name [(Mmod4)+8]", "name [(Mmod4)+16]", and "name [(Mmod4)+24]", processing device 10 refers to the directory table and the sequence tables in the corresponding segment information tables. The frame data F1, F5, F9, and the like are sampled from the frame data on magnetic disk 11, and are transferred to digital VTR 12 (Steps S13 to S15).

As shown in Fig. 4, two groups of low-rate segments are intermittently transferred from processing device 10 to digital VTR 12. A group of low-rate segments 1, 2, 3, and 4, for the segments 1-1, 2-2, 3-3, and 4-4 transmitted from switching device 9 for the first round, and another group of low-rate segments 5, 6, 7, and 8, for the segments 1-5, 2-6, 3-7, and 4-8 transmitted from switching device 9 for the second round start to be transferred at an interval corresponding to the period of time required to output four segments. The following groups of low-rate segments also start to be transferred at the same intervals.

Fig. 9 shows how frame data are typically sampled from one segment.

The original segment includes a plurality of ("n") pieces of frame data F1, F2, F3, F4, F5 ..., and Fn. The first piece of frame data, and one piece of frame for each four pieces of frame data are sampled from the frame data, and a low-rate segment including frame data F1, F5, F9, F13, ..., and Fn-3, is edited.

The contents of a piece of frame data included in the newly edited low-rate segment are the same as the contents of the piece of frame data included in the original segment.

When one piece of frame data is sampled for every four pieces of frame data, the compression rate of the newly edited video data is about 25% in terms of time. In other words, the speed of the newly edited video data is four times that of the original video data. In sampling, one piece of frame data is extracted for every predetermined number of pieces of frame data, although this value may be freely changed. This setting of sampling interval determines the compression rate in terms of time for the recorded video images.

In digital VTR 12, a group of transferred low-rate segments are recorded at a normal recording rate (that is, a videotape runs at normal running speed and the head rotates at normal velocity in digital VTR 12). As a result, these low-rate segments are recorded on a videotape at a compression rate of about 25% in terms of time.

A group of low-rate segments is a set of four low-rate segments that are compressed at a compression rate of about 25% in terms of time, so that the amount of data is the same as in one original segment. As a result, when recording one group of low-rate segments, digital VTR 12 is "ON" only for the period of time that needs to record one original segment (for 10 seconds).

As shown in Fig. 4, digital VTR 12 is "ON" only while a group of low-rate segments is transferred from processing device 10. For instance, when processing device 10 edits quad-speed low-rate video data, the period of time digital VTR 12 is "ON" is one-third of that digital VTR 12 is "OFF". As a result, low-rate segments 1-1, 2-2, 3-3, 4-4, 1-5, 2-6, 3-7, 4-8, 1-9, and the like are continuously recorded on a videotape.

### [Effects of Monitoring video system in the First Embodiment]

The effects of the monitoring video system in the present invention are described below.

The length of videotape for recording is in proportion to the frame rate used for sampling. The compression rate in terms of time of the video data recorded in digital VTR 12 can be freely set by changing the frame rate used for sampling in processing device 10.

As a result, even when the recording capacity of digital VTR 12 is fixed at certain amount, that is, even when the length of a videotape is fixed at a certain length, video data of any period of time may be recorded in digital VTR 12 by adjusting the frame rate used for sampling.

While the number of pieces of frame data included in low-rate video data recorded in digital VTR 12 is smaller than the number of frame data included in encoded video data that codecs 5 to 8 create, the contents of a piece of frame data are the same.

As a result, when recorded low-rate video tape is reproduced in digital VTR 12 at a normal speed, video images are displayed on monitor 13 at a high-speed in inverse proportion to the frame rate. High-quality video images, however, are reproduced, since the quality of each piece of the sampled frame data is not reduced.

When the period of time required to record newly edited video data on a videotape is changed by changing the compression rate of the newly edited video data in terms of time, low-rate segments transferred from processing device 10 are recorded at a normal recording rate in digital VTR 12. As a result, it is unnecessary for digital VTR 12 to include any device for changing the recording rate.

In a conventional monitoring video system, however, when the period of time to record video data on a videotape is changed, it is necessary for the VTR to change the running speed of the videotape, or the velocity of the head.

Newly transmitted video data is stored with original high frame rate on magnetic disk 11 that is easy to access, while older video data that have been transmitted from switching device 9 are stored with low frame rate in digital VTR 12 that is not easy to access. As a result, video data stored in the monitoring video system is convenient for the user.

Frame data are sampled from all the segments stored on magnetic disk 11, so that it is easy for processing device 10 to edit low-rate segments and transfer the edited low-rate segments to digital VTR 12 in an order independent of the order in which switching device 9 transmits the segments.

### [Modified Example of the First Embodiment]

While video data is transferred from processing device 10 to digital VTR 12 when switching device 9 completes one round of switching in the first embodiment, processing device 10 may transfer video data to digital VTR 12 when switching device 9 completes several rounds of switching or at predetermined length of intervals each of which corresponds to the capacity of magnetic disk 11.

While one codec is connected to each of the four cameras, and encoded video data are transmitted from these codecs to switching device 9 in the first embodiment, the four cameras may transmit video data to switching device 9, and the video data that switching device 9 selects and outputs may be encoded by one codec and transmitted to processing device 10.

### (The Second Embodiment)

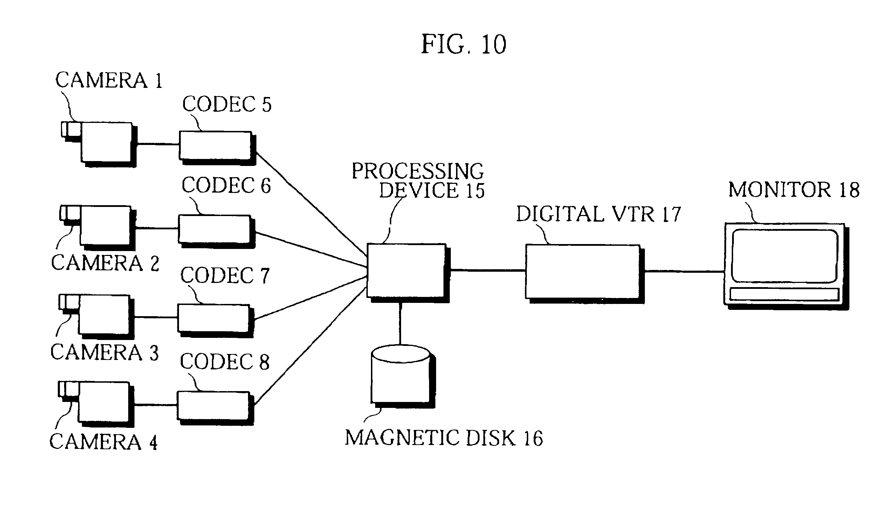

Fig. 10 shows a construction of a monitoring video system according to the second embodiment. The same reference numbers are given to the same components as in the first embodiment.

Four cameras, cameras 1 to 4, and codecs 5 to 8 are installed at four spots to be monitored in the same manner as in the first embodiment.

Encoded video data are transmitted from codecs 5 to 8 to processing device 15.

Processing device 15, which is later described in detail, receives the encoded data from codecs 5 to 8, and temporarily stores the encoded data on magnetic disk 16. Processing device 15 edits low-frame-rate encoded video data out of the encoded data stored on magnetic disk 16, and outputs the edited encoded video data to digital VTR 17.

Magnetic disk 16 is the same type as magnetic disk 11 in the first embodiment. Magnetic disk 16 temporarily stores all pieces of the video data transmitted from cameras 1 to 4, so that it is desirable for magnetic disk 16 to have a large enough capacity to store such amount of video data.

Digital VTR 17 stores the encoded video data transferred from processing device 15. Digital VTR 17 decodes the transferred encoded video data to reproduce and display video images on monitor 18 when necessary. Processing device 10 transfers the segments stored on magnetic disk 16 to digital VTR 17 as they are, and has digital VTR 17 decode the segments and display reproduced video images on monitor 18 when necessary.

### [Construction of Processing Device 15]

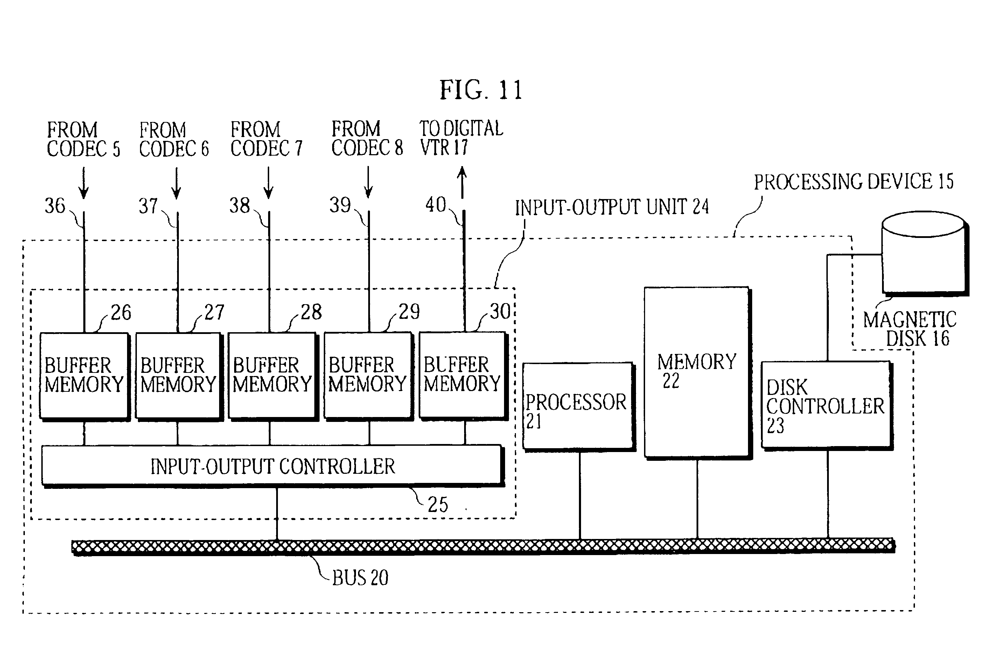

Fig. 11 shows a construction of processing device 15.

Processing device 15 is a computer that includes a system bus, that is, bus 20. Processing device 21, memory 22, disk controller 23, and input-output unit 24 including five input-output channels, that is, input-output ports 36 to 40 are connected to Bus 20.

Magnetic disk 16 is connected to disk controller 23. Codecs 5 to 8 are connected to input-output ports 36 to 39, respectively. Digital VTR 17 is connected to input-output port 40.

Processor 21 controls the overall operations of processing device 15. In other words, processor 21 controls the components in processing device 15.

Disk controller 23 controls magnetic disk 16, and performs the DMA (Direct Memory Access) transfer between magnetic disk 16 and memory 22, and between magnetic disk 16 and input-output unit 24.

Input-output unit 24 includes input-output controller 25 for controlling the DMA transfer to and from disk controller 23, and buffer memories 26 to 30 that correspond to input-output ports 36 to 40.

### [Video Data Processing by Processing Device 15]

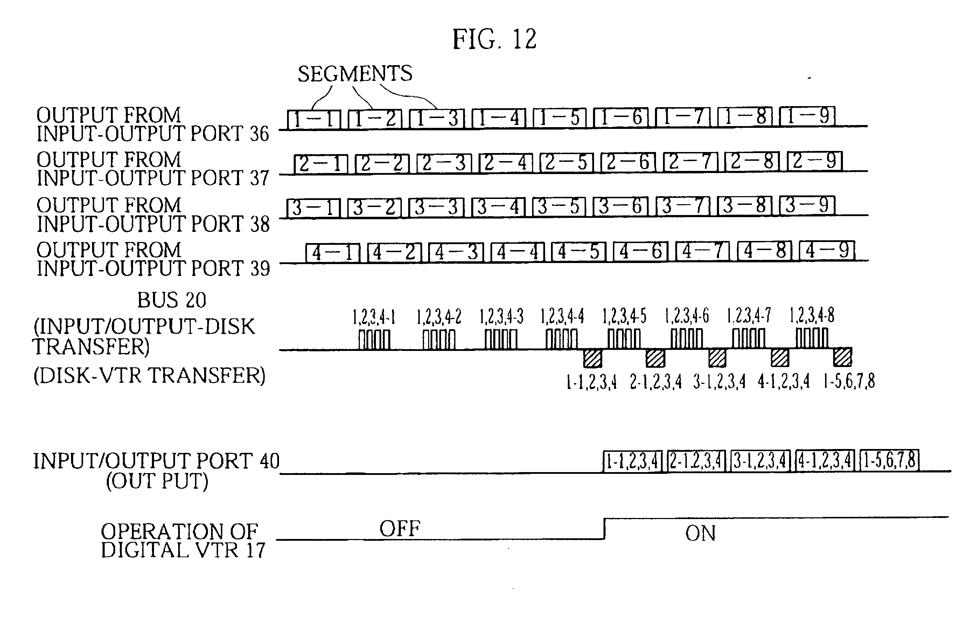

Fig. 12 is a timing chart showing video data that are transmitted from codecs 5 to 8 are input into processing device 15 and transferred to digital VTR 17. Video data processing by processing device 15 is described with reference to Fig. 12.

In the second embodiment, cameras 1 to 4 are asynchronous to codecs 5 to 8.

As shown in Fig. 12, codecs 5 to 8 transmit segments 1-1, 1-2, 1-3, ..., 2-1, 2-2, 2-3, ..., 3-1, 3-2, 3-3, ..., 4-1, 4-2, 4-3, ..., and the like to input-output ports 36 to 39 in processing device 15 in order. The contents of such segments are the same as in the first embodiment.

The segments transmitted to input-output ports 36 to 39 in parallel are transferred to magnetic disk 16 through buffer memories 26 to 29. Such transfer of segments from input-output ports 36 to 39 to magnetic disk 16 is called "input/output-disk transfer". The input/output-disk transfer is performed by input-output controller 25 and disk controller 23 under the control of processor 21.

Disk controller 23 edits low-rate video data out of the segments stored on magnetic disk 16 in order, and transfers the edited low-rate video data to memory 30 in parallel with the transmission of segments from input-output ports to magnetic disk 16. Such editing and transferring of low-rate video data is called "disk-VTR transfer".

The disk-VTR transfer is the same kind of DMA transfer as the input/output-disk transfer.

The input/output-disk transfer and the disk-VTR transfer are explained below in detail.

In this explanation, magnetic disk 16 has the capacity to store 32 segments, and disk controller 23 stores the same directory table and segment information tables as in the first embodiment.

### 1) Input/Output-Disk Transfer

Two or three memory areas each of which has the capacity to store one segment of video data are reserved in each of buffer memories 26 to 29. The segments transmitted from codecs 5 to 8 are stored in these areas. When one segment of video data is stored in each of buffer memories 26 to 29, input-output controller 25 transfers the four segments by DMA transfers from buffer memories 26 to 29 in order to disk controller 23.

Input-output controller 25 may transfer the segments stored in buffer memories 26 to 29 regularly one after another by DMA transfers at intervals of the period of time corresponding to one segment.

As shown in Fig. 12, when input-output ports 36 to 39 receive segments 1-1, 2-1, 3-1, and 4-1 that are the first scenes transmitted in parallel, these segments are transferred to disk controller 23 as segment group (1, 2, 3, 4-1).

When received, segments 1-2, 2-2, 3-2, and 4-2 that are the second scene are transferred to disk controller 23 as segment group (1, 2, 3, 4-2) in the same manner as segments 1-1, 2-1, 3-1, and 4-1. Segment groups (1, 2, 3, 4-3) and (1, 2, 3, 4-4) are transferred in the same manner.

When the video data that are transmitted in parallel from a plurality of codecs (four codecs) are transferred in serial via bus 20, the transfer rate via bus 20 needs to be more than a plurality of times (for instance, four times) the transmission rate from the codecs.

Generally speaking, the DMA transfer rate via bus 20 is 80 to 130MB/s, and several dozens of times the transmission rate to input-output ports 36 to 39, for instance, 4MB/s.

No overflow occurs in buffer memories 26 to 29. The period of time required for the DMA transfer of segment group (1, 2, 3, 4-3) is considerably shorter than that required to input segment 1-1 in input-output port 36. As a result, the DMA transfers of segment groups (1, 2, 3, 4-1) and (1, 2, 3, 4-2) are performed at a long interval. In such an interval, a disk-VTR transfer, which is explained later, is performed.

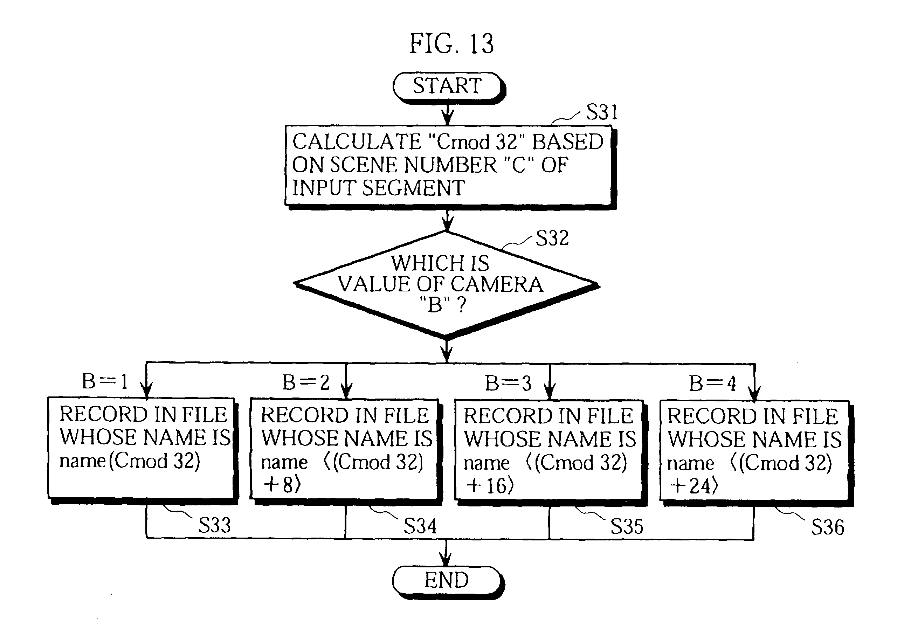

Fig. 13 is a flowchart showing an example of the recording process performed by disk controller 23. When receiving segments from input-output controller 25, disk controller 23 performs the operations described below.

When the reference number of the camera of the transmitted segment is "B" and the scene number is "C", that is, when segment B-C is transmitted, disk controller 23 calculates the remainder of the division of the value "C" by 32 (the value "Cmod32") (Step S31). When the value of "B" is "1", the segment is recorded in the segment information table whose name is "name (Cmod32)". When the value of "B" is "2", the segment is recorded in the segment information table whose name is "name (Cmod32)+8". When the value of "B" is "3", the segment is recorded in the segment information table whose name is "name (Cmod32)+16". When the value of "B" is "4", the segment is recorded in the segment information table whose name is "name (Cmod32)+24" (Steps S32 to S36).

A segment is recorded in a segment information table in the same manner as in the first embodiment.

In this process, all of the segment groups transferred to disk controller 23 are temporarily stored on magnetic disk 16. When magnetic disk 16 is filled with 32 segments, the segment group that was stored earliest is replaced by the segment group that is newly transmitted. The newly transmitted segment group is temporarily stored on magnetic disk 16.

### 2) Edition of Low-Rate Video Data And Disk-VTR Transfer

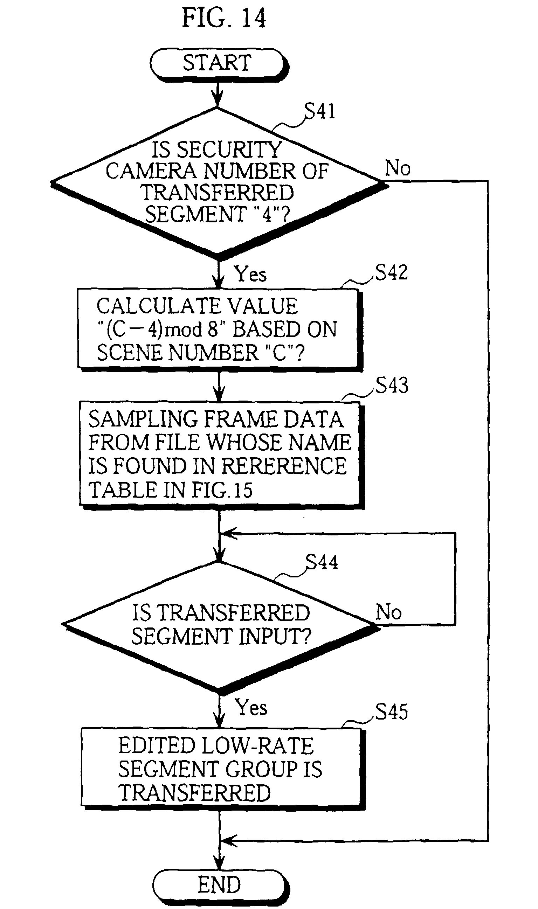

Fig. 14 is a flowchart showing an example of sampling process performed by disk controller 23. Disk controller 23 performs the operations described below when segment B-C is transferred from input-output controller 25.

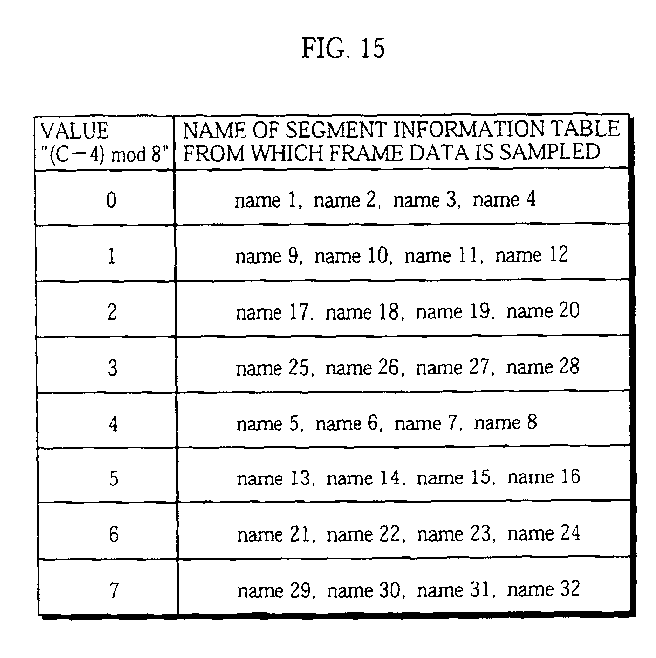

When the value of "B", which represents the reference number of the camera that took the video data of the segment, is "4", that is, when the answer to the question at Step S41 is "Yes", disk controller 23 calculates the value "(C-4)mod8", that is, the reminder of the division of (C-4) (Step S42). Disk controller 23 samples frame data from the segment information table whose name is found in the reference table in Fig. 15 based on the value "(C-4)mod8", and edits a low-rate segment group (Step S43). Just after segment B-C is transferred from input-output controller 25 to disk controller 23, disk controller 23 transfers the edited low-rate segment group to buffer memory 30 by a DMA transfer (Steps S44 and S45).

Frame data is sampled in the same manner in the first embodiment. More specifically, disk controller 23 extracts one piece of frame data for every predetermined number of pieces of frame data, for instance, for every four pieces of frame data from a segment that is selected as the subject of sampling on referring to the directory table and the segment information tables.

As shown in Fig. 12, when the input/output-disk transfer for segment group (1, 2, 3, 4-4) of the fourth scene is completed, low-rate segment group (1-1, 2, 3, 4) is edited and transferred to buffer memory 30 by a DMA transfer. Low-rate segment group (1-1, 2, 3, 4) is created by decreasing the frame rate of four segments 1-1, 1-2, 1-3, and 1-4 of the video data taken by camera 1 that are selected from segment groups (1, 2, 3, 4-1), (1, 2, 3, 4-2), (1, 2, 3, 4-3), and (1, 2, 3, 4-4) of the first to fourth scenes stored on magnetic disk 16.

When the input/output-disk transfer for segment group (1, 2, 3, 4-5) of the fifth scene is completed, low-rate segment group (2-1, 2, 3, 4) is edited and transferred to buffer memory 30 by a DMA transfer. Low-rate segment group (2-1, 2, 3, 4) is created by decreasing the frame rate of four segments 2-1, 2-2, 2-3, and 2-4 of the video data taken by camera 2 that are selected from segment groups (1, 2, 3, 4-1), (1, 2, 3, 4-2), (1, 2, 3, 4-3), and (1, 2, 3, 4-4) of the first to fourth scenes stored on magnetic disk 16.

Low-rate segment group (3-1, 2, 3, 4) corresponding to the segments of the video data taken by camera 3, and low-rate segment group (4-1, 2, 3, 4) corresponding to the segments of the video data taken by camera 4 are edited and transferred to buffer memory 30 by a DMA transfer.

As described earlier, a DMA transfer is a high speed transfer, so that the disk-VTR transfer of low-rate segment group (1-1, 2, 3, 4) is completed before the input/output-disk transfer of the next segment group, segment group (1, 2, 3, 4-5) starts. In other words, it is possible to perform disk-VTR transfers between input/output transfers.

A low-rate segment group is transmitted from input-output port 40 to digital VTR 17, and is recorded on the videotape in digital VTR 17.

A low-rate segment group is a set of four row-rate segments that are compressed at a compression rate of about 25% in terms of time as in the first embodiment, so that the amount of video data in one low-rate segment group is equal to that in one original segment. The interval between the transmissions of low-rate segment groups from input-output port 40 is the period of time corresponding to one scene. As a result, it is possible for digital VTR 17 to be continuously "ON" and to record transmitted low-rate segment groups (1-1, 2, 3, 4), (2-1, 2, 3, 4), (3-1, 2, 3, 4), (4-1, 2, 3, 4), (1-5, 6, 7, 8), and the like at a normal recording rate as shown in Fig. 12.

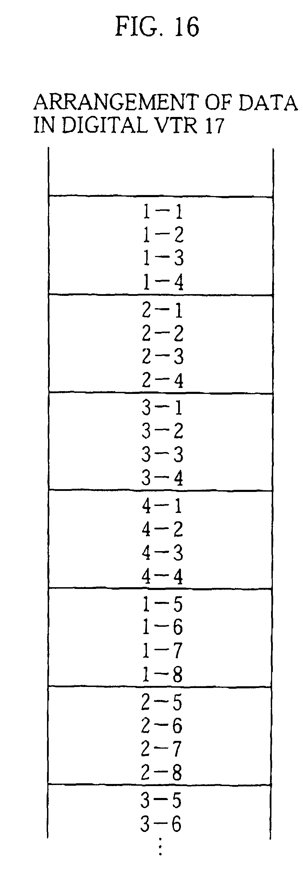

Fig. 16 shows an arrangement of the data stored on the videotape in digital VTR 17. A low-rate segment in Fig. 16 represents the segment given the same reference numbers in Fig. 12 with a decreased frame rate.

### [Effects of Monitoring video system in the Second Embodiment]

The effects of the monitoring video system in the present invention are described below.

The same effects as the first embodiment are described first.

It is possible to adjust the period of video images recorded on a fixed length of videotape by changing the frame rate used for sampling.

While the frame rate of the low-rate video data recorded in digital VTR 17 is lower than that of the original video data, the contents included in a piece of frame data in low-rate video data are the same as the contents of the piece of frame data in the original video data.

It is possible to freely set the compression rate in terms of time of edited video data. It is possible to change the compression rate in terms of time of edited video data even when digital VTR 17 include no device for changing the recording rate.

Video data with different frame rates are stored in the monitoring video system. As a result, the video data stored in the monitoring video system is convenient for the user.

Secondly, the effects unique to the second embodiment are described.

Temporarily stored on magnetic disk 16, all of the video images taken by cameras 1 to 4 may be accessed for a certain period of time after being taken.

While the frame rate of the video data recorded in digital VTR 17 is lower than that of the original video data, digital VTR 17 records all the video scenes that cameras 1 to 4 have taken.

The monitoring video system of the second embodiment includes no switching device that is included in the monitoring video system in the first embodiment. The video scenes recorded in digital VTR 17 are switched by the access sequence when processing device 15 transfers video data. As a result, it is possible to realize a variety of modifications of the present embodiment described below.

### [Modifications of the Second Embodiment]

It is possible to freely set the sampling order of the segments stored on magnetic disk 16 by changing the file names related to the values of "(C-4)mod8" in the reference table in Fig. 15.

In other words, it is possible to edit low-rate video data of a variety of patterns of switching order of video data by changing the contents of the reference table in Fig. 15.

For instance, the arrangement order of the low-rate segments recorded on the videotape in digital VTR 17 can be the order, "1-1, 2-1, 3-1, 4-1, 1-2, 2-2, 3-2, 4-2, ...", or the order, "1-1, 2-2, 3-3, 4-4, 1-5, 2-6, ..." that is the same arrangement order in the first embodiment. In these cases, video scenes taken by different cameras are cyclically displayed when the video data is reproduced.

While segments are transferred from input-output controller 25 to disk controller 23 by DMA transfers in the second embodiment, segments may be transferred via memory 22. In other words, segments may be transferred from input-output controller 25 to memory 22 and then transferred from memory 22 to disk controller 23. In this case, the transfer order of segments may be changed in the transfer.

In the input/output-disk transfer, four segments 1-1, 2-1, 3-1, and 4-1 are transferred in a group after input-output ports 36 to 39 receive all of the segments. The segments may be transferred one by one every time one of input-output ports 36 to 39 receives a segment. In this case, while the segments are transferred from buffer memories 26 to 29 in the order of input, disk controller may receive the segments in the order, "1-1, 2-1, 3-1, and 4-1" by changing the order in the DMA transfers via memory 22.

All of the segments transmitted to input-output ports 36 to 39 are transferred to disk controller 23 and then stored on magnetic disk 16 in the input/output-disk transfer in the second embodiment. It is possible to store the segments selected from those transmitted to input-output ports 36 to 39 on magnetic disk 16.

Such a selective transfer of segments may be realized by erasing the segments apart from those to be transferred when or after input-output controller 25 reads segments from buffer memories 26 to 29.

For instance, when segment 1-1 out of the four segments, segments 1-1, 2-1, 3-1, and 4-1 that are firstly input into input-output ports 36 to 39 and segment 2-2 out of the four segments, segments 1-2, 2-2, 3-2, and 4-2 that are secondly input into input-output ports 36 to 39 are selected and transferred, the same segments as in the first embodiment are stored on magnetic disk 16.

The frame rates of the segments transmitted to input-output ports 36 to 39 are kept the same when the segments are stored on magnetic disk 16 in input/output-disk transfers, and the frame rates are decreased in disk-VTR transfers in the second embodiment. It is possible to decrease the frame rates of the segments in input/output disk transfers and to further decrease the frame rates of the segments in disk-VTR transfers.

The frame rate of a segment is decreased in a input/output-disk transfer in the same manner as the decrease of the frame rate of a segment when frame data are sampled from the segment on magnetic disk 16. For instance, it is possible to prepare segment information tables as shown in Fig. 6 for each of the four buffer memories, buffer memories 26 to 29 in order to control the frame data of the segments that are input into buffer memories 26 to 29, and to sample frame data from segments on referring to the corresponding segment information tables when the segments are transferred from buffer memories 26 to 29.

It is possible to decrease the frame rate of a segment in input/output-disk transfers and to maintain the frame rate of the segment in disk-VTR transfers.

In this case, the frame rates of the video data stored on magnetic disk 16 and in digital VTR 17 are the same.

The frame rate of the video data stored in digital VTR 17 is lower than that of the video data temporarily stored on buffer memories 26 to 27, so that the frame rates of the video data stored on buffer memories 26 to 29 and in digital VTR 17 are different.

It is possible for the monitoring video system in the present embodiment to include the same switching device as switching device 9 in the first embodiment, to select segments by switching the segments that are transmitted from codecs 5 to 8, and to transmit the selected segments to the same processing device as processing device 15 in the first embodiment in order to be processed in the same manner as in processing device 15 in the first embodiment.

It is also possible for the monitoring video system in the present embodiment to transmit video data to the same switching device as switching device 9 in the first embodiment, to encode the video data that is output from the switching device in one codec, and to transmit the encoded video data to the same processing device as processing device 15 in the first embodiment in order to be processed in the same manner as in processing device 15 in the first embodiment.

### (The Third Embodiment)

The construction of a monitoring video system in the third embodiment is the same as that in the second embodiment shown in Figs. 10 and 11.

The operations of the monitoring video system in the third embodiment, however, are slightly different from those in the second embodiment. When segments corresponding to four scenes of video data are input into processing device 15, the frame rates of all of the segments are decreased and the low-rate segments are transferred in disk-VTR transfers in the second embodiment. In the third embodiment, when segments corresponding to 16 scenes of video data are input into processing device 15, certain segments are selected from these segments, low-rate segments are created for the selected segments, and the low-rate selected segments are transferred in disk-VTR transfers.

As a result, it is necessary for magnetic disk 16 to have the capacity to store 80 segments corresponding to 20 scenes of video data, and 80 segment information tables are prepared in the third embodiment.

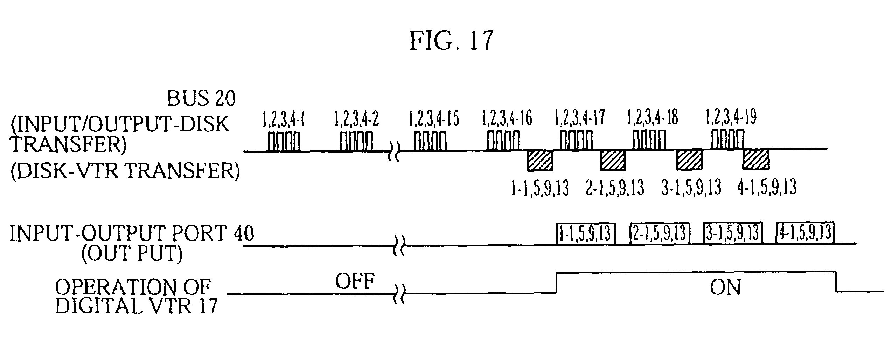

Fig. 17 is a timing chart showing the operations performed by components in the monitoring video system in the third embodiment, and shows only the part that differs from the timing chart in Fig. 12.

An input/output-disk transfer in the third embodiment is performed in the same manner in the second embodiment, so that the explanation is not given here.

A disk-VTR transfer is performed for each set of the segments corresponding to 16 scenes of video data by disk controller 23 in the manner described below.

For instance, frame data are sampled from the four segments, segments (1-1), (1-5), (1-9), and (1-13) taken by camera 1 that are selected from segment groups (1, 2, 3, 4-1) to (1, 2, 3, 4-16) corresponding to 16 scenes of video data on magnetic disk 16. From the sampled frame data, low-rate segment group (1-1, 5, 9, 13) is edited. Just after the input/output-disk transfer of the 16th segment group, segment group (1, 2, 3, 4-16) is performed, the edited low-rate segment group is transferred to buffer memory 30 by a DMA transfer.

Then, frame data is sampled from the four segments, segments (2-1), (2-5), (2-9), and (2-13) taken by camera 2 that are selected from the same segment groups, segment groups (1, 2, 3, 4-1) to (1, 2, 3, 4-16), and low-rate segment (2-1, 5, 9, 13) is edited from the sampled frame data. Just after the input/output-disk transfer of the 17th segment group, segment group (1, 2, 3, 4-17) is performed, the edited low-rate segment group is transferred to buffer memory 30 by a DMA transfer.

Low-rate segments (3-1, 5, 9, 13), (4-1, 5, 9, 13) are edited in the same manner. Low-rate segment (3-1, 5, 9, 13) is transferred just after the input/output-disk transfer of the 18th segment group, segment group (1, 2, 3, 4-18) is performed, and low-rate segment (4-1, 5, 9, 13) is transferred just after the input/output-disk transfer of the 19th segment group, segment group (1, 2, 3, 4-19) is performed.

Digital VTR 17 operates when video data is transferred from input-output port 40. Digital VTR 17 is intermittently "ON" as shown in Fig. 17.

One for every four video scenes is included in the video data recorded on the videotape in digital VTR 17. As a result, while the video data skips more scenes than the video data in the second embodiment, the period of time of the video data recorded on the same length of videotape is four times that in the second embodiment.

### (Comments on the First to Third Embodiments)

Only example operations are explained in these embodiments. It is possible to perform these operations in other ways.

For instance, when "n" pieces of frame data included in a segment are recorded in data areas on the magnetic disk at fixed intervals, and when the position of the data area on the magnetic disk in which the first frame data is recorded is given, it is possible to locate the positions of the other pieces of frame data by calculation. As a result, when frame data are sampled from the segment, it is possible to locate the frame data to be sampled by calculation without referring to either directory table or segment information table provided the first piece of frame data has been located.

Frame data are sampled at regular intervals, that is, one piece of frame data is sampled for every four pieces of frame data from one segment in these embodiments. It is possible to freely set the sampling method according to need.

For instance, it is possible to sample only the frame data that are included in the first half of a segment. It is possible to sample frame data at irregular intervals. It is also possible to sample frame data from the end to the start of a segment.

An image compression method, motion JPEG that compresses pieces of frame data, is used in the codecs in these embodiments, considering that frame data may be freely sampled. It is possible to use MPEG (Motion Picture Expert Group) as the image compression method.

When MPEG is used, however, it is difficult to freely sample frame data. As a result, it is necessary to selectively sample frame data, for instance, to sample only "I" pictures.

While video data is taken with four cameras in these embodiments, any number of cameras may be included in a monitoring video system. When only one camera is included in a monitoring video system, it is unnecessary for the monitoring video system to include switching device 9.

While a digital VTR is used as the archive device in these embodiments, a DLT or a DVD (Digital Video Disc) may be used as the archive device.

Although the present invention has been fully described by way of examples with reference to the accompanying drawings, it is to be noted that various changes and modifications will be apparent to those skilled in the art. Therefore, unless such changes and modifications depart from the scope of the present invention, they should by construed as being included therein.

## Claims

1. A monitoring video system comprising:
at least one camera for taking video images of a subject, a camera being associated with a codec that encodes the video images output from the associated camera to produce first encoded video data;
a temporary storage device for temporarily storing data;
a transmission device for transmitting at least part of the first encoded video data from each codec to the temporary storage device;
an archive device for storing data; and
a process/transfer device for changing first encoded video data that transmitted from the transmission device to the temporary storage device into second encoded video data with a frame rate lower than a frame rate of the first encoded video data based on the first encoded video data transmitted from the transmission device to the temporary storage device, and for transferring the second encoded video data to the archive device.

2. The monitoring video system according to Claim 1, wherein the process/transfer device sets at least part of the first encoded video data stored in the tcmporary storage device as a sampling subject, samples frame video data from a plurality of consecutive pieces of frame video data included in the sampling subject, and changes the sampling subject into the second encoded video data.

3. The monitoring video system according to Claim 2, wherein the process/transfer device samples the frame video data from the sampling subject at a predetermined intervals.

4. The monitoring video system according to Claim 2, wherein
the transmission device transmits segments to the temporary storage device, each segment representing a piece of first encoded video data including a plurality of consecutive pieces of frame video data, and
the process/transfer device selects a segment that is a sampling subject from the temporary storage device in a predetermined order, samples frame video data from the selected segment, changes the selected segment into a low-rate segment with a frame rate lower than a frame rate of the selected segment, and transfers the low-rate segment to the archive device.

5. The monitoring video system according to Claim 4, wherein the process/transfer device, when sampling frame video data from the selected segment, samples the frame video data from the selected segment at predetermined intervals.

6. The monitoring video system according to Claim 4, comprising a plurality of the cameras and a plurality of the codecs, wherein
a segment that the transmission device transmits is a video scene taken by one of the plurality of the cameras, and
the predetermined order for selection of segments by the process/transfer device is an order in which segments for video scenes taken by each of the plurality of the cameras are cyclically selected.

7. The monitoring video system according to Claim 4, wherein recording operations by the archive device are synchronous to transfer operations by the process/transfer device.

8. The monitoring video system according to Claim 4 comprising a plurality of the cameras and a plurality of the codecs, wherein the transmission device sequentially transmits the first encoded video data transmitted in parallel from the plurality of the codecs to the temporary storage device at a speed higher than a sum of data transmission speeds of the plurality of the codecs.

9. The monitoring video system according to Claim 8, wherein the transmission device includes buffer memories for temporarily storing segments transmitted from the plurality of the codecs, and transmits, when a predetermined number of segments are stored in the buffer memories, the predetermined number of segments to the temporary storage device.

10. The monitoring video system according to Claim 4, wherein the transmission device includes a buffer memory for a codec for temporarily storing segments transmitted from the codec, changes at least part of the segments temporarily stored in the buffer memory into low-rate segments, and transmits the low-rate segments to the temporary storage device.

11. The monitoring video system according to Claim 1 comprising:
a plurality of the cameras;
a plurality of the codecs; and
a switching device for selecting one piece of first encoded video data from the first encoded video data that are simultaneously transmitted in parallel from the plurality of the codecs, and for changing a selection of a piece of first encoded video data with a given interval.

12. The monitoring video system according to Claim 11, wherein
the transmission device transmits pieces of first encoded video data to the temporary storage device for segments each of which includes a plurality of consecutive pieces of frame video data and is equivalent to the given interval, and
the process/transfer device selects one out of segments that are to be sampled from the temporary storage device in order, samples frame video data from a selected segment, changes the selected segment into a low-rate segment with a frame rate that is lower than a frame rate of the selected segment, and transfers the low-rate segment to the archive device.

13. The monitoring video system according to Claim 12, wherein the process/transfer device, when sampling frame video data from the selected segment, samples frame video data from the selected segment at predetermined intervals.

14. The monitoring video system according to Claim 1, wherein the archive device are synchronous to transfer operations by the process/transfer device.

15. The monitoring video system according to Claim 1, wherein the transmission device includes a buffer memory for a codec for temporarily storing the first encoded video data transmitted from the codec, changes at least part of the first encoded video data temporarily stored in each buffer memory into the second encoded video data, and transmits the second encoded video data to the temporary storage device.

16. A monitoring video system comprising:
a plurality of cameras for taking video images of subjects;
a switching device for selecting one video image from the video images that are simultaneously transmitted in parallel from the plurality of cameras, and for changing a selection of a video image with a given interval;
a codec for encoding video images output from the switching device to produce first encoded video data;
a temporary storage device for temporarily storing data;
a transmission device for transmitting at least part of the first encoded video data from the codec to the temporary storage device;
an archive device for storing data; and
a process/transfer device for changing first encoded video data that transmitted from the transmission device to the temporary storage device into second encoded video data with a frame rate lower than a frame rate of the first encoded video data based on the first encoded video data transmitted from the transmission device to the temporary storage device, and for transferring the second encoded video data to the archive device.

17. The monitoring video system according to Claim 16, wherein the process/transfer device sets at least part of the first encoded video data stored in the temporary storage device as a sampling subject, samples frame video data from a plurality of consecutive pieces of frame video data included in the sampling subject, and changes the sampling subject into the second encoded video data.

18. The monitoring video system according to Claim 17, wherein the process/transfer device samples the frame video data from the sampling subject at a predetermined intervals.

19. The monitoring video system according to Claim 17, wherein
the transmission device transmits segments to the temporary storage device, each segment representing a piece of first encoded video data including a plurality of consecutive pieces of frame video data, and
the process/transfer device selects a segment that is a sampling subject from the temporary storage device in a predetermined order, samples frame video data from the selected segment, changes the selected segment into a low-rate segment with a frame rate lower than a frame rate of the selected segment, and transfers the low-rate segment to the archive device.

20. The monitoring video system according to Claim 1, wherein recording operations by the archive device are synchronous to transfer operations by the process/transfer device.

21. The monitoring video system according to Claim 16, wherein the transmission device includes a buffer memory for temporarily storing the first encoded video data transmitted from the codec, changes at least part of the first encoded video data temporarily stored in the buffer memory into the second encoded video data, and transmits the second encoded video data to the temporary storage device.
